# EUROPEAN PATENT SPECIFICATION

(11) **EP 4 106 522 B1**
(45) Date of publication and mention of the grant of the patent: **03.04.2024**
(21) Application number: 21710810.9
(22) Date of filing: 16.02.2021
(51) Int. Cl.: A01N 25/30, A01N 25/04

(54) **CROP HUSBANDRY COMPOSITION AND USE THEREOF**
ZUSAMMENSETZUNG FÜR DIE PFLANZENZUCHT UND IHRE VERWENDUNG
COMPOSITION DE RÉGIE DE CULTURE ET SON UTILISATION

(30) Priority: 19.02.2020 US 202062978511 P; 11.11.2020 US 202063112255 P
(43) Date of publication of application: 28.12.2022
(73) Proprietor: Sasol Chemicals GmbH, 20537 Hamburg (DE)
(72) Inventor: VARADARAJ, Ramesh, Houston, TX 77079 (US); NORMAND, Ollie, Westlake, LA 70669 (US); BICKEL, Jennifer, Westlake, LA 70669 (US)
(74) Representative: Müller Schupfner & Partner Patent- und Rechtsanwaltspartnerschaft mbB
(86) International application number: PCT/US2021/018198
(87) International publication number: WO 2021/167895

(56) References cited:
- EP-A1- 0 968 649
- EP-A2- 1 875 803
- WO-A1-99/26472
- WO-A1-2015/091617
- WO-A1-2015/103192

## Description

### FIELD OF THE INVENTION

This invention relates to a crop husbandry composition and use thereof, e.g. for the cultivation, treatment, and/or protection of plants, crops, seeds, plant propagation material, aquatic environments and soil.

### BACKGROUND OF THE INVENTION

Successful crop husbandry involves a number of activities to ensure crop wellness, including, amongst others: plant pest- and pathogen control, e.g. using pesticides or herbicides, pest repellants or attractants; plant growth regulation; the preservation of crops or parts thereof, e.g. by inhibiting evaporation or mitigating sun damage; effective fertilization; and soil treatment.

Plants, crops, seeds, plant propagation material, and the like are sensitive to damage by UV radiation, e.g. by evaporation of moisture causing dehydration, and/or sun damage. Many compounds applied in crop husbandry are sensitive to damage by solar UV radiation and/or are susceptible to wash-off, e.g. by rain or irrigation, which reduces their efficacy.

A new global trend indicates a shift away from crop husbandry based on synthetic chemicals, towards crop husbandry based on naturally- or microbially derived compounds. However, naturally- or microbially derived compounds may also be sensitive to damage by UV solar radiation and/or are also susceptible to wash-off, which may compromise their efficacy.

Formulations for use in crop protection comprising alcohols and/or alcohol alkoxylates, where one may be based on long chain fatty alcohol but not necessarily the combination of the two, are known from the prior art, for example from WO 2015/103192 A1, WO 2015/091617 A1, EP 0968649 A1, WO 99/26472 A1 or EP 1875803 A2.

A crop husbandry composition for the cultivation, treatment, and/or protection of plants, crops, seeds, plant propagation material, aquatic environments and soil that at least ameliorates these problems would be beneficial.

### DESCRIPTION OF THE INVENTION

### Crop Husbandry Composition

According to the invention, there is provided a crop husbandry composition, the crop husbandry composition comprising:
an alcohol or mixture of alcohols of the formula (I)

   R₁-OH (I)
and an alcohol alkoxylate or mixture of alcohol alkoxylates of the formula (II)

   R₂-O-(C_{z}H_{2z}O)ₓ-H (II)

   wherein:
   R₁ and R₂ are independently of one another a linear or branched alkyl, each having a total number of carbon atoms from 20 to 32, z has a value of 2 or 3, and x has a value of from 1 to 150, and
   wherein the alcohol or mixture of alcohols and the alcohol alkoxylate or mixture of alcohol alkoxylates are in a mass ratio of from 99:1 to 51:49.

R₁ and R₂ are independently of one another a linear or branched alkyl, each having a total number of carbon atoms from 20 to 32.

In a most preferred embodiment, R₁ and R₂ are the same.

Preferably, z is 2, so that the alcohol alkoxylate of formula (II) is an alcohol ethoxylate or the mixture of alcohol alkoxylates is a mixture of alcohol ethoxylates.

Preferably, x has a value of from 10 to 50. More preferably, x has a value of from 15 to 35. Most preferably, x has a value of from 20 to 30.

The alcohol or mixture of alcohols may be produced from a Ziegler process, from a Guerbet process, from the hydrogenation of oleochemical feedstocks, or by separation from oxo alcohols. Preferably, the alcohol or mixture of alcohols is produced from a Ziegler process.

The alcohols or mixture of alcohols may be present in the crop husbandry composition in a mass percentage of from about 60wt% to about 90wt%, preferably about 70wt% to about 80wt%, based on the total weight of the crop husbandry composition.

The alcohol alkoxylate or mixture of alcohol alkoxylates may be present in the crop husbandry composition in a mass percentage of from about 10wt% to about 40wt%, preferably from about 20wt% to about 30wt%, based on the total weight of the crop husbandry composition.

The alcohols may be a majority of linear alcohols (greater than 50wt% linear alcohol), preferably between 60wt% and 90wt% linear alcohols, based on the total weight of linear and branched alcohols present.

The crop husbandry composition may include from about 30wt% to about 45wt% of C20 linear alcohols, from about 21wt% to about 39wt% C22 linear alcohols, from about 4wt% to about 12wt% C24 linear alcohols, and from about 1wt% to about 7wt% C26 linear alcohols, based on the total weight of linear and branched alcohols present.

The alcohol or mixture of alcohols may include additional components comprising paraffins, esters, ethers or mixtures thereof.

The paraffins may include C20 to C32 paraffins. The esters may include C20 to C40 esters. The ethers may include C22 to C40 ethers.

The crop husbandry composition may include from about 0.7wt% to about 4wt% paraffins, preferably from about 0.7wt% to about 2.5wt% paraffins; from about 1.5wt% to about 9wt% esters, preferably from about 4wt% to about 9wt% esters; and from about 1wt% to about 6wt% ethers, based on the total weight of the alcohols or mixture of alcohols and the additional components.

The alcohols may be present in the alcohol or mixture of alcohols in a mass percentage of from about 65wt% to about 99wt%, preferably 70wt% to 95wt%, most preferably 75wt% to 85wt%, based on the total weight of the alcohols or mixture of alcohols and the additional components.

The additional components may be present in the alcohol or mixture of alcohols in a mass percentage of from about 1wt% to about 35wt%, preferably 5wt% to 30wt%, most preferably 15wt% to 25wt%, based on the total weight of the alcohols or mixture of alcohols and the additional components.

The crop husbandry composition may contain an effective amount of an agrochemically active ingredient.

The agrochemically active ingredient may thus be present in the crop husbandry composition in a mass percentage of from about 0.01 wt% to about 10 wt%, based on the total weight of the crop husbandry composition.

The alcohol alkoxylate or mixture of alcohol alkoxylates may be produced by reaction over a suitable alkoxylation catalyst, for example an alkaline earth metal-based catalyst, or KOH catalyst. Preferably, the alcohol alkoxylate or mixture of alcohol alkoxylates is an alcohol ethoxylate or mixture of alcohol ethoxylates produced by reaction over an alkaline earth metal-based ethoxylation catalyst, most preferably over a calcium-based ethoxylation catalyst.

Advantageously, ethoxylation using an alkaline earth metal-based ethoxylation catalyst is able to produce alcohol ethoxylates with closely controlled varying degrees of ethoxylation (i.e. a varying number of ethoxylate groups) and a narrow ethoxylate distribution.

The difference in the number of ethoxylate groups between the alcohol ethoxylate with the lowest number and highest number of ethoxylate groups may be preferably less than 20, more preferably less than 10.

The alcohol or mixture of alcohols and the alcohol alkoxylate or mixture of alcohol alkoxylates are in a mass ratio of from about 99:1 to about 51:49. Preferably, the mass ratio of the alcohol or mixture of alcohols to the alcohol alkoxylate or mixture of alcohol alkoxylates is from about 70:30 to about 90:10.

The crop husbandry composition may be solid, e.g. in pastel, pellet or flake form, or the crop husbandry composition may be a paste.

The agrochemically active ingredient may be a pesticide, a herbicide, a fungicide, a plant growth regulator, a nutrient, a fertilizer, a sun protection agent, or any other active ingredient useful in crop husbandry, or any combination of the aforesaid.

The sun protection agent may be or may include a sun-block component, for example, polymers, polymer particles in emulsion, or inorganic materials such as calcium carbonate, clay, silica, or alumina.

The agrochemically active ingredient may be a synthetic chemical agrochemically active ingredient, or a naturally- or microbially-derived agrochemically active ingredient.

In a preferred embodiment of the invention, the agrochemically active ingredient is a pesticide. The pesticide may be a chemical pesticide, a biopesticide or biopesticide precursor, or a mixture thereof.

Where the pesticide is a biopesticide or biopesticide precursor, the crop husbandry composition may include one or more organic acids.

The chemical pesticide may be one or a mixture of chemical pesticides comprising abamectin, acetamiprid, azoxystrobin, bifenthrin, emamectin, fluoxastrobin, kresoxim-methyl, lambda-cyhalothrin, metaflumizone, metalaxyl, picoxystrobin, pyraclostrobin, trifloxystrobin and triticonazole, although any other chemical pesticide suitable for a particular application may be selected.

The biopesticide or biopesticide precursor may be one or a mixture of viable biopesticides or biopesticide precursors comprising bacteria or bacterial spores, a fungi or a fungal spore, algae or an algal spore, viruses, enzymes, nucleic acids, fermentates, plant-incorporated protectants, or gene-silencing (RNAi) pesticides, although any other biopesticide suitable for a particular application may be selected.

Preferably the biopesticide or biopesticide precursor is a bacterial spore. Most preferably, the biopesticide or biopesticide precursor is a bacterial spore of the bacterial species or genus *Bacillus.,* and especially Bacillus subtilis, and/or Bacillus thuringiensis.

Bacterial spores contemplated in this invention include Bacillus aizawai, Bacillus cereus, Bacillus firmus, Bacillus kurstaki, Bacillus lentimorbus, Bacillus licheniformis, Bacillus megaterium, Bacillus popillae, Bacillus pumilus, Bacillus sphaericus, and especially Bacillus subtilis, and/or Bacillus thuringiensis.

Fungal spores contemplated in this invention include those from the Class of Basidiomycetes, Chytridiomycetes, Deuteromycetes, Hyphochytridiomycetes, Oomycetes, Plasmodiophoromycetes, Sordariomycetes, Trichomycetes and Zygomycetes. The fungal species spore is at least one from Arthrobotrys superba, Arthrobotrys irregular, Beauveria bassiana, Fusarium spp., Hirsutella rhossiliensis, Hirsutella thompsonii, Lagenidium giganteum, Myrothecium, Nomuraea rileyi, Paecilomyces lilacinus, Trichoderma, Vericillium lecanii, and/or Verticillium lecani.

The crop husbandry composition may comprise from about 0.01 wt% to about 10 wt% of the chemical pesticide, based on the total weight of the crop husbandry composition.

The crop husbandry composition may comprise from about 0.01 wt% to about 10 wt% of the biopesticide or biopesticide precursor, based on the total weight of the crop husbandry composition.

Where the biopesticide or biopesticide precursor is a bacterial spore, the crop husbandry composition may comprise from about 10² spores/g to about 10⁸ spores/g.

### Crop Husbandry Emulsion

The crop husbandry composition may form a stable emulsion when mixed with water. The stable emulsion formed when mixing the crop husbandry composition with water may be a viscoelastic fluid.

According to a further aspect of the invention, there is provided a crop husbandry emulsion, comprising:
the crop husbandry composition as hereinbefore described; and
water.

When it is referred to "hereinbefore" or "hereinbefore defined" in this specification, it is intended to include all embodiments mentioned before, including the preferred embodiments mentioned before.

The crop husbandry emulsion may be a concentrated aqueous emulsion.

Advantageously, the crop husbandry emulsion is able to achieve a similar suspension loading of the agrochemically active ingredient, with a lower loading of the alcohol alkoxylate (surfactant), and has greater emulsification efficiency to emulsify the agrochemically active ingredient than traditional alkoxylates (e.g. such as those derived via conventional KOH catalysis), since the alcohol alkoxylate is a peaked alkoxylate with a narrow ethoxylate product distribution.

In particular, advantageously the crop husbandry emulsion is able to achieve a similar suspension loading of the sun-block component, with a lower loading of the alcohol alkoxylate (surfactant), and has greater emulsification efficiency to emulsify the sun-block component than traditional alkoxylates (e.g. such as those derived via conventional KOH catalysis), since the alcohol alkoxylate is a peaked alkoxylate with a narrow ethoxylate product distribution.

The crop husbandry emulsion may be a stable self-emulsifying fluid which is a viscoelastic fluid.

The crop husbandry emulsion may form a stable emulsion for a period of at least 3 months at temperatures in the range of from about 5°C to about 45°C.

The crop husbandry emulsion may be viscoelastic at 25°C and may have an elastic modulus of at least 75% of the viscous modulus.

The crop husbandry emulsion may include from about 20wt% to about 99wt% water, preferably from about 70wt% to about 99% water, more preferably about 80wt% to about 99wt% water, based on the total weight of the crop husbandry emulsion.

The crop husbandry emulsion may absorb or attenuate UV light in the wavelength range from about 190 nm to about 390 nm.

### Field Solution

Typically, the crop husbandry emulsion is diluted prior to use thereof to form a field solution.

Thus, according to a further aspect of the invention, there is provided a field solution, comprising:
the crop husbandry emulsion as hereinbefore described; and
a diluent.

The diluent may comprise at least water.

The field solution may include from about 90wt% to about 99.9wt% diluent, based on the total weight of the field solution.

The field solution may absorb or attenuate UV light in the wavelength range from about 190 nm to about 390 nm.

### Method for Protecting Plants

According to a further aspect of the invention, there is provided a method for the cultivation, treatment, and/or protection of plants, crops, seeds, plant propagation material, aquatic environments, soil, or the like, the method including applying a crop husbandry emulsion or a field solution to the plants, crops, seeds, plant propagation material, aquatic environment, soil, or the like.

The crop husbandry emulsion may be as hereinbefore described.

The field solution may be as hereinbefore described.

The crop husbandry emulsion or the field solution may form a coating on a plant, crop, seed or plant propagation material, aquatic environments, soil, or the like to which it is applied. The coating may absorb or attenuate UV light in the wavelength range from about 190 nm to about 390 nm. The coating may provide protection for the agrochemically active ingredient therein from sun damage, improve sticker- or rainfastness properties which prevents wash-off of the composition and thus also the agrochemically active ingredient therein, as well as protect the plants, crops, seeds, plant propagation material, aquatic environments, soil, or the like to which it is applied from sun damage and/or dehydration.

### Use of the crop husbandry composition

According to a further aspect of the invention, there is provided the use of a crop husbandry composition comprising:
an alcohol of the formula (I); and
an alcohol alkoxylate or mixture of alcohol alkoxylates of the formula (II);
for the cultivation, treatment, and/or protection of plants, crops, seeds, plant propagation material, aquatic environments, soil, or the like to which the crop husbandry composition is applied.

The crop husbandry composition may be as hereinbefore described.

Preferably, the crop husbandry composition hereinbefore described, the crop husbandry emulsion hereinbefore described, and the field solution hereinbefore described are for the cultivation, treatment, and/or protection of plants, crops, seeds, plant propagation material, aquatic environments, soil, or the like.

In use, the crop husbandry composition is typically emulsified in water to produce the crop husbandry emulsion hereinbefore described. Typically, the crop husbandry emulsion is further diluted in water to form the field solution hereinbefore described.

In use, the crop husbandry emulsion and the field solution may form a coating on a plant, crop, seed, plant propagation material, aquatic environment, soil, or the like to which it is applied. The coating may provide protection for the agrochemically active ingredient therein (e.g. chemical pesticide, biopesticide or biopesticide precursor, or other UV-sensitive agrochemically active ingredient) from sun damage, improve sticker- or rainfastness properties which prevents wash-off of the composition and thus also the agrochemically active ingredient therein, as well as protect the plants, crops, seeds, plant propagation material, aquatic environments, soil, or the like to which it is applied from sun damage and/or dehydration.

Plants, crops, seed or plant propagation material that may be treated with the crop husbandry composition, crop husbandry emulsion or field solution comprising the crop husbandry composition, may include any food crop intended for human consumption, any animal fodder crops including hay or grass, ornamental plants flowers, trees or lawns.

For example, the plant or crop may be a tobacco plant, or a plant species derived from a tobacco plant.

### Advantages

Advantageously, the crop husbandry composition provides protection for the agrochemically active ingredient (e.g. chemical pesticide, biopesticide or biopesticide precursor, or other UV-sensitive agrochemically active ingredient) therein from sun damage, improves sticker- or rainfastness properties which prevents wash-off of the composition and thus also the agrochemically active ingredient therein, as well as protects the plants, crops, seeds, plant propagation material, aquatic environments, soil, or the like to which it is applied from sun damage and/or dehydration.

Accordingly, crop husbandry emulsions and field solutions which comprise the crop husbandry composition provide similar advantages.

For example, where the crop husbandry emulsion or the field solution contains a pesticide, the coating resulting from the application of the crop husbandry emulsion or the field solution will provide protection against plant pathogens and/or plant pests. The coating resulting from the application of the crop husbandry emulsion absorbs and/or attenuates UV light in the wavelength range from about 190 nm to about 390 nm, and thus also provides protection from sun damage for the pesticide therein, as well as provides protection from dehydration and/or sun damage for the plants, crops, seeds, plant propagation material, aquatic environments, soil, or the like to which the crop husbandry emulsion or field solution is applied.

The inventors believe the protection against sun damage is attributable to a combination of reduced dehydration, reflection of light, and absorption of light, as a result of the coating formed on the plants, crops, seeds, plant propagation material, aquatic environments, soil, or the like to which the crop husbandry composition is applied.

The crop husbandry composition of the present invention advantageously forms a stable emulsion in water.

The crop husbandry composition of the present invention shows low foaming tendencies in emulsion and field solution form, and exhibits strong adhesion to hydrophilic surfaces.

Advantageously, the crop husbandry composition is storage stable in both solid form and in emulsion, and thus also supports the viability and/or stability of microbially-derived agrochemically active ingredients (e.g. bacterial spores) therein during storage.

### EXAMPLES

The invention will now be described with reference to the following non-limiting examples and Figures.

In the Figures:
Figure 1 is a differential scanning calorimetry (DSC) output for Comparative Composition 1;
Figure 2 is a differential scanning calorimetry (DSC) output for Composition 2;
Figure 3 is a differential scanning calorimetry (DSC) output for Composition 3;
Figure 4 are optical micrographs of stabilized water-in-decane emulsion (top left), Comparative Emulsion EW1 (bottom left), Emulsion EW2 (top right) and Emulsion EW3 (bottom right);
Figure 5 are images of the emulsions of each of Comparative Composition 1 (left), Composition 2 (center), and Composition 3 (right);
Figure 6 is a graph of transmitted light as a function of centrifuge time for Comparative Emulsion EW1, Emulsion EW2, and Emulsion EW3;
Figures 7a, 7b and 6c are graphs of elastic and viscous modulus for Comparative Emulsion EW1, Emulsion EW2, and Emulsion EW3, respectively;
Figure 8 is an image showing the difference in foaming properties between of Comparative Field Solution FS1, Field Solution FS2, and Field Solution FS3;
Figure 9 is a graph showing light absorbance as a function of wavelength (UV range absorbance) for Comparative Field Solution FS1, Field Solution FS2, and Field Solution FS3;
Figure 10 is an image showing the coating formed by field solutions of Comparative Field Solution FS1 (left) and Field Solution FS2 (right) on a test substrate; and
Figure 11 is a figure showing the corresponding coatings of Figure 9 after washing with water.

### Analysis of starting alcohols

The alcohols used in the preparation of Comparative Composition 1, Composition 2 and Composition 3 were analyzed by gas chromatograph (GC) and results are set out in Table 1. GC measurements were conducted using an Agilent 7890A gas chromatograph with an FID detector and a DB-1 polysiloxane column (100% polydimethyl siloxane).

**Table 1**

| Compound | Alcohol A for Comparative Composition 1 (wt%) | Alcohol B for Composition 2 (wt%) | Alcohol C for Composition 3 (wt%) |
|---|---|---|---|
| C16 alcohol | 61.5 | - | - |
| C18 alcohol | 35.3 | 1.9 | 3.8 |
| C20 alcohol | - | 42.8 | 45.6 |
| C22 alcohol | - | 18.7 | 19.4 |
| C24 alcohol | - | 8.7 | 9.1 |
| C26 alcohol | - | 4.3 | 4.6 |
| C28 alcohol | - | 1.9 | 2.2 |
| C30 alcohol | - | 1.1 | 1.3 |
| Total alcohols | 96.8 | 79.4 | 86 |
| Non-Alcohols (comprising esters, ethers and paraffins) | 3.2 | 20.6 | 14 |

### Solid Crop Husbandry Compositions - Preparation

Three solid crop husbandry compositions were prepared for testing and comparison. Comparative Composition 1 is a comparative composition, whereas Composition 2 and Composition 3 reflect compositions within the scope of the present invention.

| | |
|---|---|
| Comparative Composition 1 | Alcohol A (80wt%) and C16/C18 alcohol ethoxylate (21 EO) (20wt%) mixture |
| Composition 2 | Alcohol B (80wt%) and ethoxylate (30 EO) of Alcohol B (20wt%) mixture |
| Composition 3 | Alcohol C (80wt%) and ethoxylate (25 EO) of Alcohol C (20wt%) mixture |

Comparative Composition 1 was prepared by mixing 80wt% Alcohol A (available under the trade name NAFOL 1618) with 20wt% of a C16/C18 alcohol ethoxylate (21 EO groups) (available under the trade name GALENOL 2100), heating to 70°C, mixing for approximately 2 hours and then allowing to cool to ambient temperature.

Composition 2 was prepared by mixing 80wt% Alcohol B (available under the trade name ALFOL 20+) with 20wt% of an alcohol ethoxylate (30 EO groups), prepared by ethoxylation of Alcohol B over a calcium hydrotalcite catalyst (Sasol NOVEL catalyst), heating to 70°C, mixing for approximately 2 hours and then allowing to cool to ambient temperature.

Composition 3 was prepared by mixing 80wt% Alcohol C (available under the trade name ALFOL 20+) with 20wt% of an alcohol ethoxylate (25 EO groups), prepared by ethoxylation of the Alcohol C over a calcium hydrotalcite catalyst, heating to 70°C, mixing for approximately 2 hours and then allowing to cool to ambient temperature.

All three compositions were an opaque, waxy solid at ambient temperature.

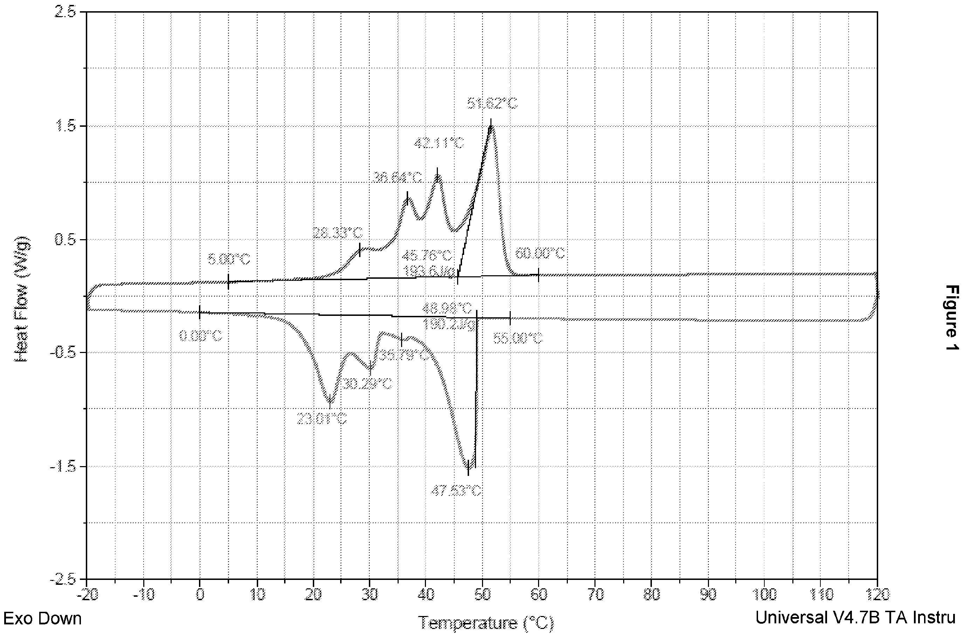

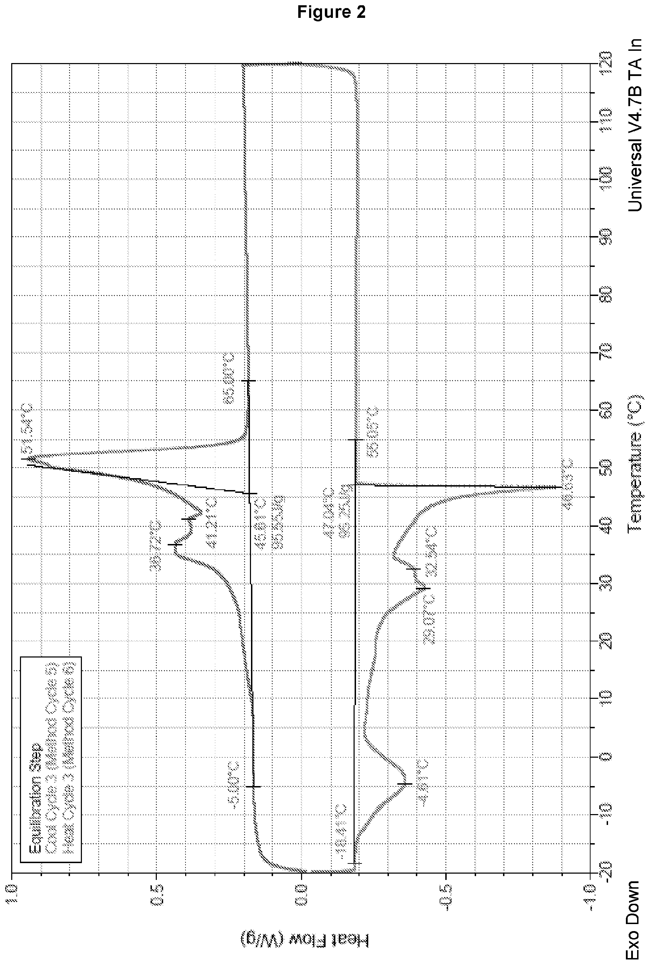

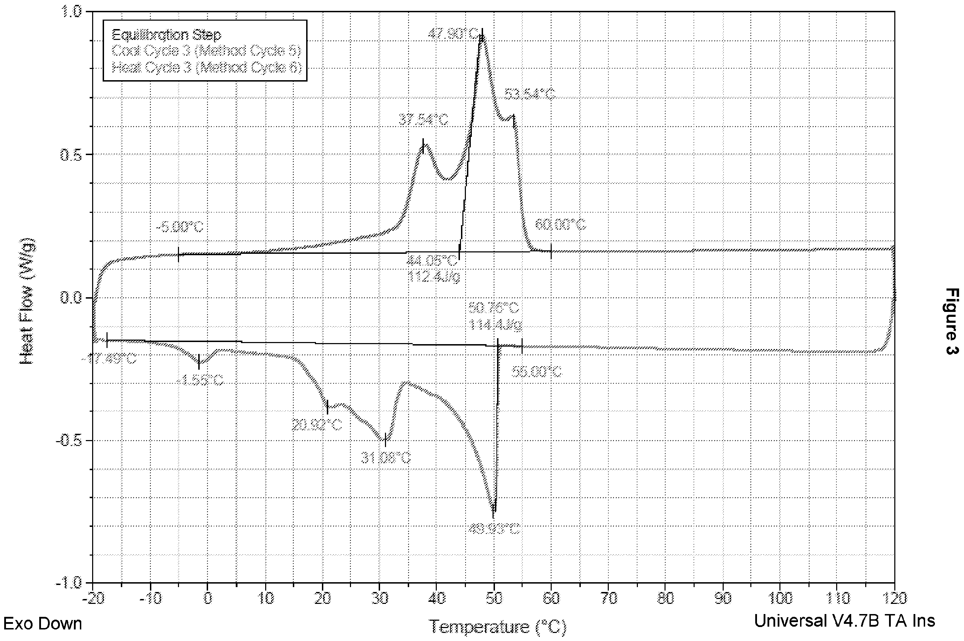

The thermal properties of each of Comparative Composition 1, Composition 2, and Composition 3 were measured by differential scanning calorimetry (DSC) analysis. The DSC profiles for Comparative Composition 1, Composition 2, and Composition 3 are shown in Figures 1, 2 and 3, respectively.

Comparative Composition 1 shows four distinct melting phase transitions, whereas those for Composition 2 and Composition 3 show two melting phase transitions. The enthalpies of the melting phase transitions are significantly lower for the inventive formulations of Composition 2 and Composition 3. The enthalpy of melting for Comparative Composition 1 was 194 J/g, whereas the enthalpies of melting for Composition 2 and Composition 3 were 96 J/g and 112 J/g, respectively. Without wishing to be bound by theory, it is believed that the reduction in enthalpy of melting is due to non-alcohol components which cause a eutectic depression in the energy required in the melting transitions. This is beneficial, for example, in the pellitization of the crop husbandry compositions.

### Emulsions - Preparation and Properties

Comparative Emulsion EW1, Emulsion EW2, and Emulsion EW3 were prepared by mixing each of Comparative Composition 1, Composition 2, and Composition 3, respectively, in water to provide a 3wt% emulsion of each of the compositions relative to the total mass of the emulsion, heating the emulsion to 70°C and mixing for approximately 4 hours, to form emulsions Comparative EW1, EW2 and EW3.

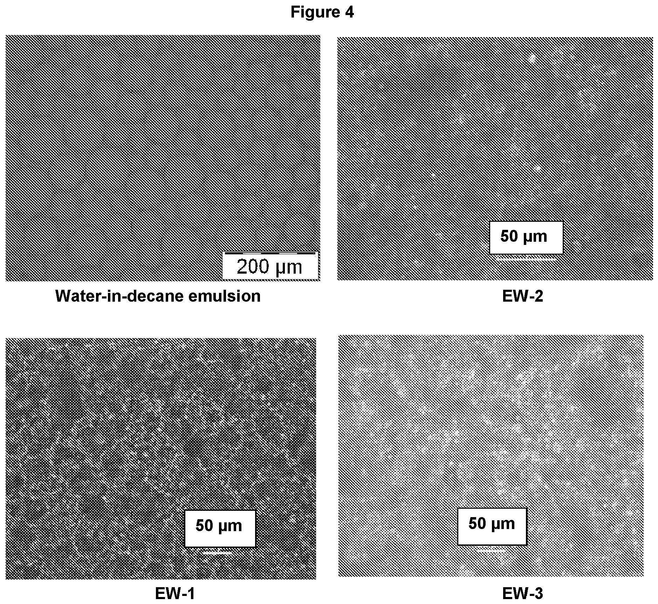

Optical micrographs were taken of a water-in-decane emulsion stabilized by a C12 ethoxylate (20EO groups) commercially available under the trade name ALFOL1214-20EO, as well as for the three emulsions (Comparative EW1, EW2, and EW3) as shown in Figure 4. It was observed that the emulsions are not typical water-in-oil emulsions, since they exhibit a textured morphology and are birefringent. The optical micrographs are suggestive of a lyotropic liquid crystalline microstructure for the emulsion. The microstructure of the emulsion is unique, and the applicant believes that this contributes to its improved adhesion to surfaces relative to known surfactants and wetting agents.

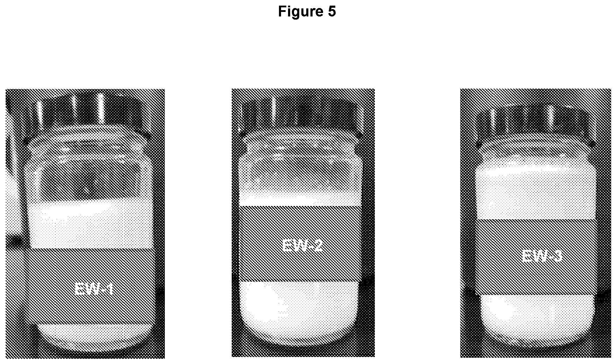

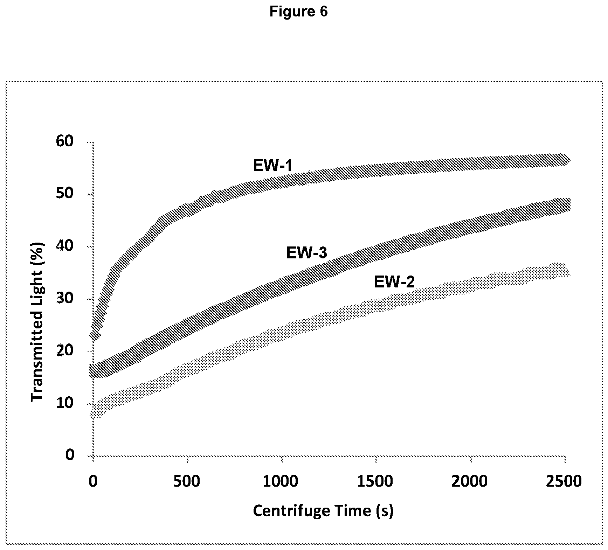

As shown in Figure 5, the emulsions were stable for more than 3 months, with no phase separation or creaming occurring. The relative stability of each of the emulsions were determined by centrifugation using a Lumisizer apparatus. A graph of transmitted light as a function of centrifuge time is shown in Figure 6. EW2 and EW3 exhibited significantly higher stability than Comparative EW1, as evidenced by the smaller slope of the transmitted light versus centrifuge time graph.

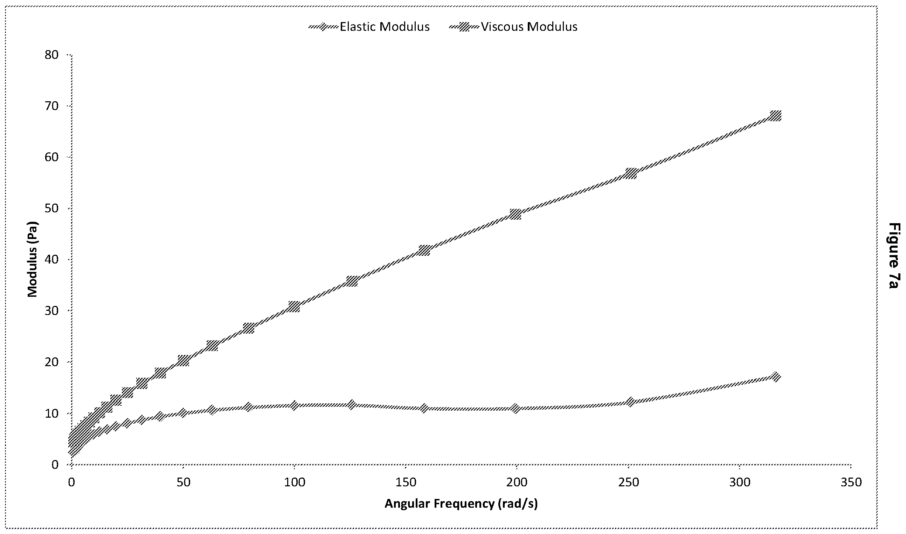

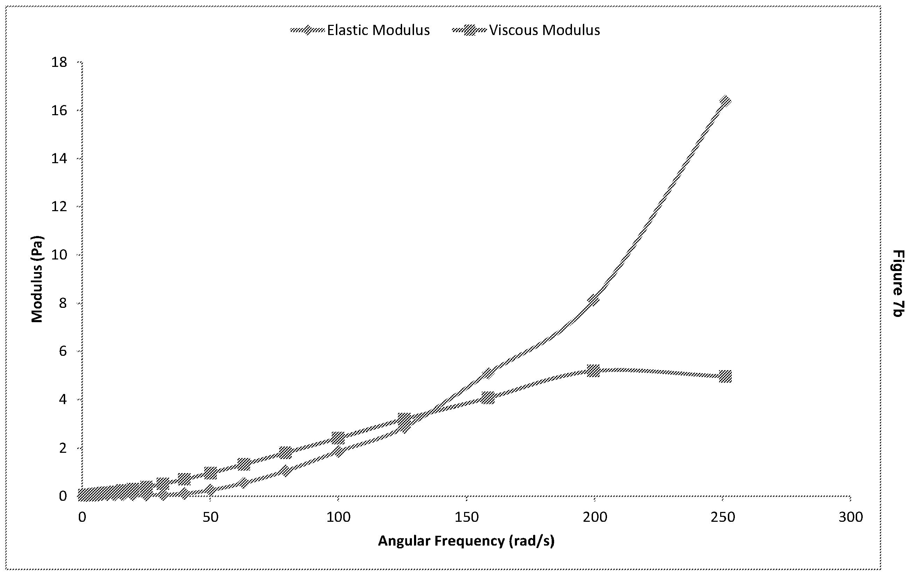

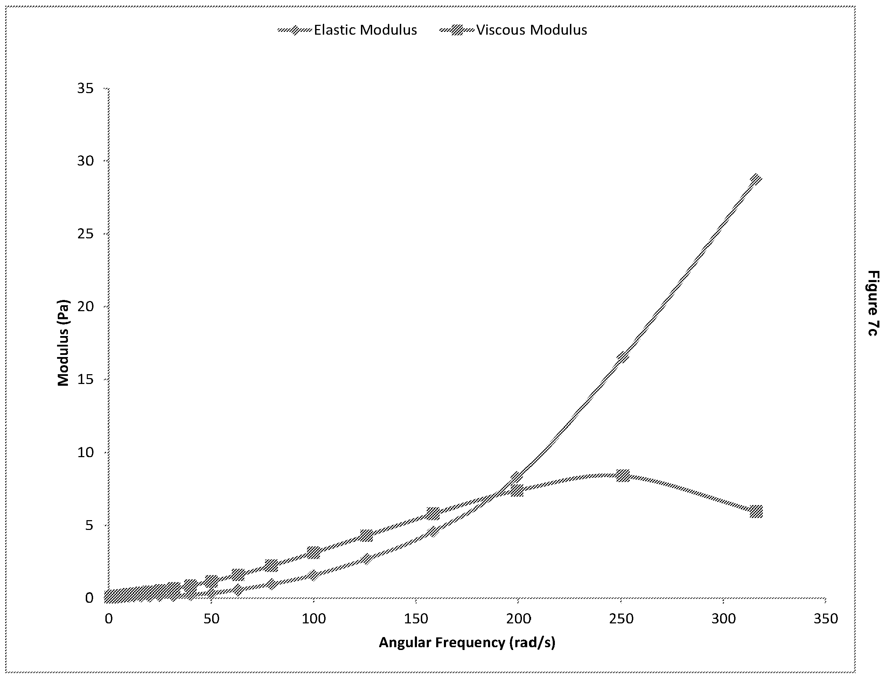

The rheological properties for each of the emulsions are shown in Figure 7a, 7b, and 7c. Comparative EW1 (Figure 7a) exhibits viscoelastic behavior. The viscous modulus is 2x to 7x higher than the elastic modulus over the range of angular frequencies measured. Emulsions EW2 (Figure 7b) and EW3 (Figure 7c) also exhibit viscoelastic behavior. However, the viscous modulus of EW2 and EW3 is lower than Comparative EW1. Furthermore, the viscous modulus of EW2 and EW3 is only marginally higher than the elastic modulus up to about 150s⁻¹. Thereafter, the elastic modulus increases significantly. At shear oscillation >150s⁻¹, EW2 and EW3 are elastic fluids.

This is particularly advantageous, since where the elastic modulus is greater than the viscous modulus, the result is a reduced "bounce-off" effect of the drops of the emulsions (and thus also the corresponding field solutions) from plant leaves during application, e.g. by spraying. The probability that drops of the emulsion or field solution bounce off the leaf surfaces is reduced, and therefore a larger quantity of the sprayed emulsion or field solution sticks to the leaf surfaces during application, improving overall efficacy and effectiveness.

### Field Solutions -Preparation and Properties

Comparative Field Solution FS1, Field Solution FS2, and Field Solution FS3 were prepared by diluting each of Comparative Emulsion EW1, Emulsion EW2, and Emulsion EW3, respectively, in water to provide a 0.3wt% emulsion of each of the compositions relative to the total mass of the field solution.

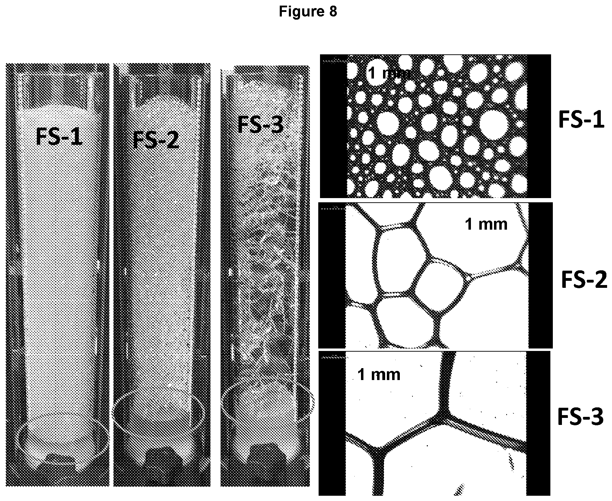

The foaming properties of the field solutions were studied and Figure 8 shows a side-by-side comparison of the type of foam generated by each of the field solutions. Foam properties were measured using a Kruss foam apparatus.

It is clear that FS2 and FS3 not only generate coarse foam, but rapidly defoam upon standing. Coarse (unstable) foam formation and rapid defoaming such as that exhibited by FS2 and FS3 (as compared to Comparative FS1) is desirable in practice, where is it generally desired that foaming is avoided.

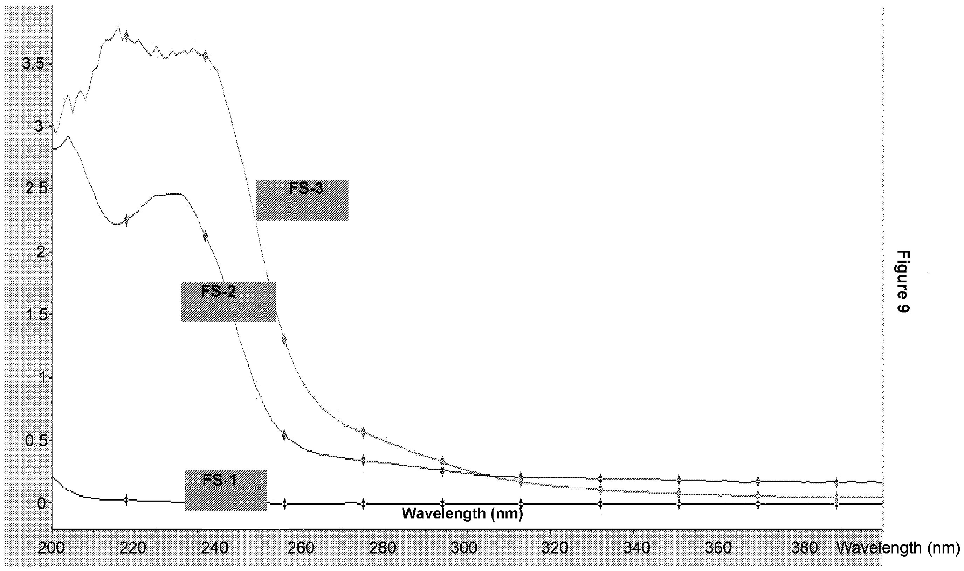

In Figure 9, the UV absorbance spectrum of Comparative FS1, FS2 and FS3 are shown. FS2 and FS3 exhibit strong UV absorbance in the 190nm to 350nm wavelength range, compared with Comparative FS1. This is clearly advantageous in mitigating sun damage to plants, crops, seeds, plant propagation material, aquatic environments, soils, or the like to which FS2 and FS3 have been applied, as well as to mitigating sun damage to the agrochemically active ingredient contained in the Field Solutions.

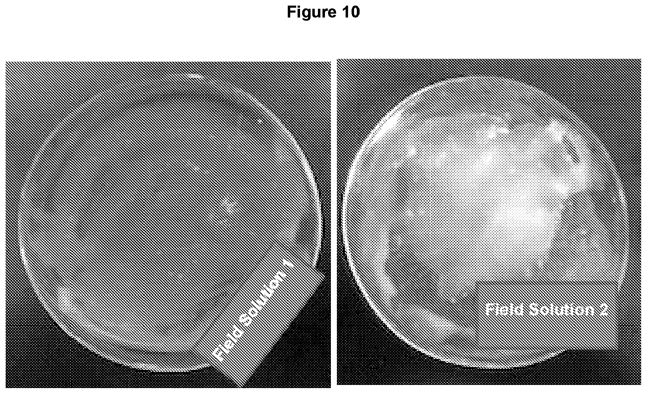

Figure 10 is an image of representative coatings made from Comparative FS1 (left) and FS2 (right) on a glass slide. Each of the glass slides were sprayed for 30 seconds using a laboratory spray bottle positioned about 6 inches from the slide surface to ensure the same amount of fluid was used to produce an even coating on each glass slide. The transparency of the coatings shown in Figure 10 is a function of the coating thickness. It is clear that FS2 has more favorable physical properties than Comparative FS1, which allows FS2 to form a thicker coating on the substrate than that coating formed from Comparative FS1.

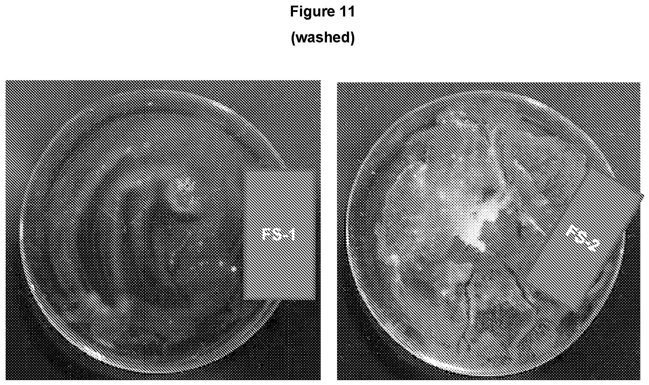

The coatings were washed with 300 ml distilled water for 5 minutes using a laboratory spray bottle with the spray bottle positioned about 6 inches from the coated surface and photographs taken thereafter. Figure 11 is an image of the water-washed coatings of Figure 11. Water washing removes the water soluble ethoxylate and leaves behind the water insoluble alcohol. This washing effect is more pronounced in Comparative FS1, with the result that FS2 leaves behind a thicker coating after washing. In practice, FS2 would provide better protection than Comparative FS1 against dehydration and/or sun damage and retain more agrochemically active ingredient, e.g. pesticide, both directly after first application, and after washing, for example by irrigation or rain.

The experimental data presented herein, individually or collectively, shows that compositions of the invention (Composition 2 and Composition 3) as used in corresponding emulsions EW2 and EW3, and field solutions FS2 and FS3, have clearly superior thermal, emulsion stability, rheological, foaming, UV absorbance, and coating properties over Comparative Composition 1, emulsion Comparative EW1 and field solution Comparative FS1.

## Claims

1. A crop husbandry composition, the crop husbandry composition comprising:
an alcohol or mixture of alcohols of the formula (I)
R₁-OH (I)
and an alcohol alkoxylate or mixture of alcohol alkoxylates of the formula (II)
R₂-O-(C_{z}H_{2z}O)ₓ-H (II)
wherein:
R₁ and R₂ are independently of one another a linear or branched alkyl, each having a total number of carbon atoms from 20 to 32, z has a value of 2 or 3, and x has a value of from 1 to 150, and
wherein the alcohol or mixture of alcohols and the alcohol alkoxylate or mixture of the alcohol alkoxylates are in a mass ratio of from 99:1 to 51:49.

2. The crop husbandry composition according to claim 1, wherein independent from each other:
R₁ and R₂ are the same; and/or
z is 2, so that the alcohol alkoxylate of formula (II) is an alcohol ethoxylate or the mixture of alcohol alkoxylates is a mixture of alcohol ethoxylates; and/or
x has a value of from 10 to 50, preferably 15 to 35, most preferably 20 to 30.

3. The crop husbandry composition according to any one of claims 1 or 2, wherein the alcohols or mixture of alcohols is present in the crop husbandry composition in a mass percentage of from 60wt% to 90wt%, preferably 70wt% to 80wt%, based on the total weight of the crop husbandry composition.

4. The crop husbandry composition according to any one of claims 1 to 3, wherein the alcohol alkoxylate or mixture of alcohol alkoxylates is present in the crop husbandry composition in a mass percentage of from 10wt% to 40wt%, preferably from 20wt% to 30wt%, based on the total weight of the crop husbandry composition.

5. The crop husbandry composition according to any one of claims 1 to 4, wherein the alcohols present are greater than 50wt% linear alcohols, preferably between 60wt% and 90wt% linear alcohols, based on the total weight of linear and branched alcohols present.

6. The crop husbandry composition according to any one of claims 1 to 5, wherein the alcohol or mixture of alcohols includes additional components comprising paraffins, esters, ethers or mixtures thereof,
wherein the crop husbandry composition
- preferably includes from 0.7wt% to 4wt% paraffins, most preferably from 0.7wt% to 2.5wt% paraffins;
- preferably from 1.5wt% to 9wt% esters, most preferably from 4wt% to 9wt% esters; and
- preferably from 1wt% to 6wt% ethers;
based on the total weight of the alcohols or mixture of alcohols and the additional components.

7. The crop husbandry composition according to claim 6, wherein the alcohols are present in the alcohol or mixture of alcohols in a mass percentage of from 65wt% to 99wt%, preferably 70wt% to 95wt%, most preferably 75wt% to 85wt%, based on the total weight of the alcohols or mixture of alcohols and the additional components.

8. The crop husbandry composition according to any one of claims 6 or 7, wherein the additional components are present in the alcohol or mixture of alcohols in a mass percentage of from 1wt% to 35wt%, preferably 5wt% to 30wt%, most preferably 15wt% to 25wt%, based on the total weight of the alcohols or mixture of alcohols and the additional components.

9. The crop husbandry composition according to any one of claims 1 to 8, wherein the crop husbandry composition contains an agrochemically active ingredient in a mass percentage of from 0.01 wt% to 10 wt%, based on the total weight of the crop husbandry composition,
wherein the agrochemically active ingredient preferably is a pesticide, a herbicide, a fungicide, a plant growth regulator, a nutrient, a fertilizer, a sun protection agent, or any combination of the aforesaid.

10. The crop husbandry composition according to any one of claims 1 to 9, wherein the alcohol or mixture of alcohols and the alcohol alkoxylate or mixture of alcohol alkoxylates are in a mass ratio of from 70:30 to 90:10.

11. A crop husbandry emulsion, comprising the crop husbandry composition according to any one of claims 1 to 10, and water,
wherein the crop husbandry emulsion preferably includes from 20wt% to 99wt% water, more preferably from 70wt% to 99% water, most preferably 80wt% to 99wt% water, based on the total weight of the crop husbandry emulsion.

12. The crop husbandry emulsion according to claim 11, wherein the crop husbandry emulsion is a stable self-emulsifying fluid which is viscoelastic at 25°C and has an elastic modulus of at least 75% of the viscous modulus.

13. The crop husbandry emulsion according to any one of claims 11 or 12, wherein the crop husbandry emulsion absorbs or attenuates UV light in the wavelength range from 190 nm to 390 nm.

14. A field solution, comprising the crop husbandry composition according to any one of claims 1 to 10 and water, wherein the field solution includes from 90wt% to 99.9wt% water, based on the total weight of the field solution,
wherein the field solution preferably absorbs or attenuates UV light in the wavelength range from 190 nm to 390 nm.

15. A method for the cultivation, treatment, and/or protection of plants, crops, seeds, plant propagation material, aquatic environments, or soil, the method including applying a crop husbandry emulsion according to any one of claims 11 to 13 or a field solution according to claim 14 to the plants, crops, seeds, plant propagation material, aquatic environment, or soil.

16. The method according to claim 15, wherein the crop husbandry emulsion or the field solution forms a coating on the plant, crop, seed or plant propagation material, aquatic environments, or soil to which it is applied,
wherein the coating preferably absorbs or attenuates UV light in the wavelength range from 190 nm to 390 nm.

17. Use of a crop husbandry composition according to any one of claims 1 to 10 for the cultivation, treatment, and/or protection of plants, crops, seeds, plant propagation material, aquatic environments, or soil to which the crop husbandry composition is applied.

## Patentansprüche

1. Eine Zusammensetzung für den Pflanzenbau, wobei die Zusammensetzung für den Pflanzenbau umfasst:
einen Alkohol oder eine Mischung von Alkoholen der Formel (I)
R₁- OH (I)
und ein Alkoholalkoxylat oder ein Gemisch von Alkoholalkoxylaten der Formel (II)
R₂-O-(C_{z}H_{2z}O)ₓ-H (II)
wobei:
R₁ und R₂ unabhängig voneinander ein lineares oder verzweigtes Alkyl jeweils mit einer Gesamtkohlenstoffatomanzahl von 20 bis 32 sind,
z einen Wert von 2 oder 3 hat und
x einen Wert von 1 bis 150 hat, und
wobei der Alkohol oder das Gemisch der Alkohole und das Alkoholalkoxylat oder das Gemisch der Alkoholalkoxylate in einem Massenverhältnis von 99:1 bis 51:49 sind.

2. Die Zusammensetzung für den Pflanzenbau nach Anspruch 1, wobei unabhängig voneinander:
R₁ und R₂ gleich sind; und/oder
z 2 ist, so dass das Alkoholalkoxylat der Formel (II) ein Alkoholethoxylat ist oder die Mischung von Alkoholalkoxylaten eine Mischung von Alkoholethoxylaten ist; und/oder
x einen Wert von 10 bis 50, vorzugsweise 15 bis 35, am meisten bevorzugt 20 bis 30, hat.

3. Die Zusammensetzung für den Pflanzenbau nach einem der Ansprüche 1 oder 2, wobei die Alkohole oder die Mischung von Alkoholen in der Zusammensetzung für den Pflanzenbau in einem Massenprozentsatz von 60 Gew.% bis 90 Gew.%, vorzugsweise 70 Gew.% bis 80 Gew.%, bezogen auf das Gesamtgewicht der Zusammensetzung für den Pflanzenbau, vorhanden ist.

4. Die Zusammensetzung für den Pflanzenbau nach einem der Ansprüche 1 bis 3, wobei das Alkoholalkoxylat oder die Mischung von Alkoholalkoxylaten in der Zusammensetzung für den Pflanzenbau in einem Massenprozentsatz von 10 Gew.% bis 40 Gew.%, vorzugsweise von 20 Gew.% bis 30 Gew.%, bezogen auf das Gesamtgewicht der Zusammensetzung für den Pflanzenbau, vorhanden ist.

5. Die Zusammensetzung für den Pflanzenbau nach einem der Ansprüche 1 bis 4, wobei die vorhandenen Alkohole mehr als 50 Gew.% lineare Alkohole, vorzugsweise zwischen 60 Gew.% und 90 Gew.% lineare Alkohole sind, bezogen auf das Gesamtgewicht der vorhandenen linearen und verzweigten Alkohole.

6. Die Zusammensetzung für den Pflanzenbau nach einem der Ansprüche 1 bis 5, wobei der Alkohol oder das Alkoholgemisch zusätzliche Komponenten enthält umfassend Paraffine, Ester, Ether oder Mischungen davon,
wobei die Zusammensetzung für den Pflanzenbau
- vorzugsweise von 0,7 Gew.% bis 4 Gew.% Paraffine, am meisten bevorzugt von 0,7 Gew.% bis 2,5 Gew.% Paraffine enthält;
- vorzugsweise von 1,5 Gew.% bis 9 Gew.% Ester, am meisten bevorzugt von 4 Gew.% bis 9 Gew.% Ester; und
- vorzugsweise von 1 Gew.% bis 6 Gew.% Ether;
bezogen auf das Gesamtgewicht der Alkohole oder der Mischung von Alkoholen und den zusätzlichen Komponenten.

7. Die Zusammensetzung für den Pflanzenbau nach Anspruch 6, wobei die Alkohole in dem Alkohol oder der Alkoholmischung in einem Massenprozentsatz von 65 Gew.% bis 99 Gew.%, vorzugsweise 70 Gew.% bis 95 Gew.%, am meisten bevorzugt 75 Gew.% bis 85 Gew.%, bezogen auf das Gesamtgewicht der Alkohole oder der Alkoholmischung und der zusätzlichen Komponenten, enthalten sind.

8. Die Zusammensetzung für den Pflanzenbau nach einem der Ansprüche 6 oder 7, wobei die zusätzlichen Komponenten in dem Alkohol oder der Alkoholmischung in einem Massenprozentsatz von 1 Gew.% bis 35 Gew.%, vorzugsweise 5 Gew.% bis 30 Gew.%, am meisten bevorzugt 15 Gew.% bis 25 Gew.%, bezogen auf das Gesamtgewicht der Alkohole oder der Alkoholmischung und der zusätzlichen Komponenten, vorhanden sind.

9. Die Zusammensetzung für den Pflanzenbau nach einem der Ansprüche 1 bis 8, wobei die Zusammensetzung für den Pflanzenbau einen agrochemisch wirksamen Bestandteil in einem Massenprozentsatz von 0,01 Gew.% bis 10 Gew.%, bezogen auf das Gesamtgewicht der Zusammensetzung für den Pflanzenbau, enthält,
wobei der agrochemisch wirksame Bestandteil vorzugsweise ein Pestizid, ein Herbizid, ein Fungizid, ein Pflanzenwachstumsregulator, ein Nährstoff, ein Düngemittel, ein Sonnenschutzmittel oder eine beliebige Kombination der vorgenannten Stoffe ist.

10. Die Zusammensetzung für den Pflanzenbau nach einem der Ansprüche 1 bis 9, wobei der Alkohol oder das Gemisch von Alkoholen und das Alkoholalkoxylat oder das Gemisch von Alkoholalkoxylaten in einem Massenverhältnis von 70:30 bis 90:10 sind.

11. Eine Emulsion für den Pflanzenbau, umfassend die Zusammensetzung für den Pflanzenbau nach einem der Ansprüche 1 bis 10 und Wasser,
wobei die Emulsion für den Pflanzenbau vorzugsweise 20 Gew.% bis 99 Gew.% Wasser, vorzugsweise 70 Gew.% bis 99 Gew.% Wasser, am meisten bevorzugt 80 Gew.% bis 99 Gew.% Wasser, bezogen auf das Gesamtgewicht der Emulsion für den Pflanzenbau, enthält.

12. Die Emulsion für den Pflanzenbau nach Anspruch 11, wobei die Emulsion für den Pflanzenbau eine stabile selbstemulgierende Flüssigkeit ist, die bei 25 °C viskoelastisch ist und einen Elastizitätsmodul von mindestens 75 Gew.% des Viskositätsmoduls aufweist.

13. Die Emulsion für den Pflanzenbau nach einem der Ansprüche 11 oder 12, wobei die Emulsion für den Pflanzenbau UV-Licht im Wellenlängenbereich von 190 nm bis 390 nm absorbiert oder abschwächt.

14. Eine Feldlösung, umfassend die Zusammensetzung für den Pflanzenbau nach einem der Ansprüche 1 bis 10 und Wasser, wobei die Gebrauchslösung 90 Gew.% bis 99,9 Gew.% Wasser, bezogen auf das Gesamtgewicht der Gebrauchslösung, enthält,
wobei die Feldlösung vorzugsweise UV-Licht im Wellenlängenbereich von 190 nm bis 390 nm absorbiert oder abschwächt.

15. Ein Verfahren zur Kultivierung, zur Behandlung und/oder zum Schutz von Pflanzen, Feldfrüchten, Samen, Pflanzenzuchtmaterial, aquatischen Anlagen oder Boden, wobei das Verfahren das Aufbringen einer Emulsion für den Pflanzenbau gemäß einem der Ansprüche 11 bis 13 oder einer Feldlösung gemäß Anspruch 14 auf die Pflanzen, Feldfrüchte, Samen, Pflanzenzuchtmaterial, aquatische Anlagen oder Boden umfasst.

16. Das Verfahren nach Anspruch 15, wobei die Emulsion für den Pflanzenbau oder die Feldlösung eine Beschichtung auf der Pflanze, Feldfrucht, Samen oder Pflanzenzuchtmaterial, aquatischen Anlagen oder Boden bildet, auf die sie aufgebracht wird,
wobei die Beschichtung vorzugsweise UV-Licht im Wellenlängenbereich von 190 nm bis 390 nm absorbiert oder abschwächt.

17. Verwendung einer Zusammensetzung für den Pflanzenbau nach einem der Ansprüche 1 bis 10 für die Kultivierung, die Behandlung und/oder den Schutz von Pflanzen, Feldfrüchten, Samen, Pflanzenzuchtmaterial, aquatischen Anlagen oder Boden, auf die die Zusammensetzung für den Pflanzenbau aufgebracht wird.

## Revendications

1. - Composition de régie de culture, la composition de régie de culture comprenant :
un alcool ou un mélange d'alcools de la formule (I) :
R₁-OH (I)
et un alcoxylate d'alcool ou un mélange d'alcoxylates d'alcool de la formule (II) :
R₂-O-(C_{z}H_{2z}O)ₓ-H (II)
où :
R₁ et R₂ sont indépendamment l'un de l'autre un alkyle linéaire ou ramifié, chacun ayant un nombre total d'atomes de carbone de 20 à 32, z a une valeur de 2 ou 3, et x a une valeur de 1 à 150, et
dans laquelle l'alcool ou le mélange d'alcools et l'alcoxylate d'alcool ou le mélange des alcoxylates d'alcool sont dans un rapport massique de 99:1 à 51:49.

2. - Composition de régie de culture selon la revendication 1, dans laquelle indépendamment l'un de l'autre
R₁ et R₂ sont identiques ; et/ou
z est 2, de telle sorte que l'alcoxylate d'alcool de formule (II) est un éthoxylate d'alcool ou le mélange d'alcoxylates d'alcool est un mélange d'éthoxylates d'alcool ; et/ou
x a une valeur de 10 à 50, de préférence de 15 à 35, de la façon que l'on préfère le plus de 20 à 30.

3. - Composition de régie de culture selon l'une quelconque des revendications 1 ou 2, dans laquelle l'alcool ou le mélange d'alcools est présent dans la composition de régie de culture dans un pourcentage massique de 60 % en poids à 90 % en poids, de préférence de 70 % en poids à 80 % en poids, sur la base du poids total de la composition de régie de culture.

4. - Composition de régie de culture selon l'une quelconque des revendications 1 à 3, dans laquelle l'alcoxylate d'alcool ou le mélange d'alcoxylates d'alcool est présent dans la composition de régie de culture dans un pourcentage massique de 10 % en poids à 40 % en poids, de préférence de 20 % en poids à 30 % en poids, sur la base du poids total de la composition de régie de culture.

5. - Composition de régie de culture selon l'une quelconque des revendications 1 à 4, dans laquelle les alcools présents sont à plus de 50 % en poids des alcools linéaires, de préférence sont entre 60 % en poids et 90 % en poids des alcools linéaires, sur la base du poids total des alcools linéaires et ramifiés présents.

6. - Composition de régie de culture selon l'une quelconque des revendications 1 à 5, dans laquelle l'alcool ou le mélange d'alcools comprend des composants supplémentaires comprenant des paraffines, des esters, des éthers ou des mélanges de ceux-ci,
dans laquelle la composition de régie de culture
- comprend de préférence de 0,7 % en poids à 4 % en poids de paraffines, de la façon que l'on préfère le plus de 0,7 % en poids à 2,5 % en poids de paraffines ;
- de préférence de 1,5 % en poids à 9 % en poids d'esters, de la façon que l'on préfère le plus de 4 % en poids à 9 % en poids d'esters ; et
- de préférence de 1 % en poids à 6 % en poids d'éthers ;
sur la base du poids total des alcools ou du mélange d'alcools et des composants supplémentaires.

7. - Composition de régie de culture selon la revendication 6, dans laquelle les alcools sont présents dans l'alcool ou le mélange d'alcools dans un pourcentage massique allant de 65 % en poids à 99 % en poids, de préférence de 70 % en poids à 95 % en poids, de la façon que l'on préfère le plus de 75 % en poids à 85 % en poids, sur la base du poids total des alcools ou du mélange d'alcools et des composants supplémentaires.

8. - Composition de régie de culture selon l'une quelconque des revendications 6 ou 7, dans laquelle les composants supplémentaires sont présents dans l'alcool ou le mélange d'alcools dans un pourcentage massique allant de 1 % en poids à 35 % en poids, de préférence de 5 % en poids à 30 % en poids, de la façon que l'on préfère le plus de 15 % en poids à 25 % en poids, sur la base du poids total des alcools ou du mélange d'alcools et des composants supplémentaires.

9. - Composition de régie de culture selon l'une quelconque des revendications 1 à 8, dans laquelle la composition de régie de culture contient un ingrédient agrochimiquement actif dans un pourcentage massique allant de 0,01 % en poids à 10 % en poids, sur la base du poids total de la composition de régie de culture,
dans laquelle l'ingrédient agrochimiquement actif est, de préférence, un pesticide, un herbicide, un fongicide, un régulateur de la croissance des plantes, un nutriment, un engrais, un agent de protection solaire, ou toute combinaison des ingrédients précités.

10. - Composition de régie de culture selon l'une quelconque des revendications 1 à 9, dans laquelle l'alcool ou le mélange d'alcools et l'alcoxylate d'alcool ou le mélange d'alcoxylates d'alcool sont dans un rapport massique allant de 70 :30 à 90 :10.

11. - Émulsion de régie de culture, comprenant la composition de régie de culture selon l'une quelconque des revendications 1 à 10, et de l'eau,
dans laquelle l'émulsion de régie de culture comprend, de préférence, de 20 % en poids à 99 % en poids d'eau, de façon davantage préférée de 70 % en poids à 99 % en poids d'eau, de la façon que l'on préfère le plus de 80 % en poids à 99 % en poids d'eau, sur la base du poids total de l'émulsion de régie de culture.

12. - Émulsion de régie de culture selon la revendication 11, dans laquelle l'émulsion de régie de culture est un fluide auto-émulsifiant stable qui est viscoélastique à 25°C et a un module élastique d'au moins 75 % du module visqueux.

13. - Émulsion de régie de culture selon l'une quelconque des revendications 11 ou 12, dans laquelle l'émulsion de régie de culture absorbe ou atténue la lumière UV dans la plage des longueurs d'onde de 190 nm à 390 nm.

14. - Solution de champ, comprenant la composition de régie de culture selon l'une quelconque des revendications 1 à 10 et de l'eau, dans laquelle la solution de champ comprend de 90 % en poids à 99,9 % en poids d'eau, sur la base du poids total de la solution de champ,
dans laquelle la solution de champ de préférence absorbe ou atténue la lumière UV dans la plage des longueurs d'onde de 190 nm à 390 nm.

15. - Procédé pour la culture, le traitement et/ou la protection de plantes, de cultures, de semences, de matériel de propagation des plantes, d'environnements aquatiques, ou du sol, le procédé comprenant l'application d'une émulsion de régie de culture selon l'une quelconque des revendications 11 à 13 ou d'une solution de champ selon la revendication 14 sur les plantes, les cultures, les semences, le matériel de propagation des plantes, l'environnement aquatique ou le sol.

16. - Procédé selon la revendication 15, dans lequel l'émulsion de régie de culture ou la solution de champ forme un revêtement sur la plante, la culture, la semence ou le matériel de propagation des plantes, les environnements aquatiques ou le sol sur lesquels elle est appliquée,
dans lequel le revêtement de préférence absorbe ou atténue la lumière UV dans la plage des longueurs d'onde de 190 nm à 390 nm.

17. - Utilisation d'une composition de régie de culture selon l'une quelconque des revendications 1 à 10 pour la culture, le traitement et/ou la protection de plantes, de cultures, de semences, de matériel de propagation des plantes, d'environnements aquatiques ou du sol, sur lesquels la composition de régie de culture est appliquée.
